# EUROPÄISCHE PATENTANMELDUNG

(11) **EP 0 988 879 A1**
(43) Veröffentlichungstag der Anmeldung: **29.03.2000**
(21) Anmeldenummer: 99116438.5
(22) Anmeldetag: 21.08.1999
(51) Int. Cl.: B01D 5/00, B01D 7/02, B01D 53/00, B01D 53/26, F25B 47/00

(54) **Verfahren und Vorrichtung zur Gasreinigung**

(30) Priorität: 04.09.1998 DE 19840409
(71) Anmelder: FRAUNHOFER-GESELLSCHAFT ZUR FÖRDERUNG DER ANGEWANDTEN FORSCHUNG E.V., 80636 München (DE)
(72) Erfinder: Noeres, Peter, Dipl.-Ing., 45881 Gelsenkirchen (DE); Hölder, Daniel, Dipl.-Ing., 40477 Düsseldorf (DE)
(74) Vertreter: Gagel, Roland, Dr.

(57) **Zusammenfassung**

Die Erfindung betrifft ein Verfahren und eine Vorrichtung zur Reinigung von Gasen, insbesondere von feuchten Gasen.

Bei dem erfindungsgemäßen Verfahren wird das zu reinigende Rohgas in einem Wärmetauscher (1) vorgekühlt und anschließend in einer Kältemaschine (2) auf eine Temperatur abgekühlt, bei der unerwünschte Gaskomponenten aus dem Gas auskondensieren, so daß abgekühltes Reingas erhalten wird. Die Vorkühlung des Rohgases im Wärmetauscher (1) erfolgt durch bereits abgekühltes Reingas, dem erwärmtes Reingas beigemischt wurde. Das erwärmte Reingas wird aus dem Reingas abgezweigt, das den Wärmetauscher (1) durchlaufen hat.

Bei dem erfindungsgemäßen Verfahren kann ein Einfrieren des Wärmetauschers der Kälterückgewinnung bei der Gasreinigung auf einfache Weise vermieden werden. Dadurch ist der Einsatz teurer Spezialwärmetauscher nicht mehr erforderlich. Das Verfahren kann auch in Fällen eingesetzt werden, in denen bisher eine Kälterückgewinnung ausgeschlossen war.

## Beschreibung

Die Erfindung betrifft ein Verfahren und eine Vorrichtung zur Reinigung von Gasen, insbesondere von feuchten Gasen, durch Auskondensation unerwünschter Gaskomponenten.

Die Reinigung von Gasen ist in vielen Bereichen der Technik, insbesondere in der Prozeßtechnik, von großer Bedeutung.

Für die Eliminierung unerwünschter Gaskomponenten aus einem Gasstrom werden in der Regel physikalische und chemische Wäschen angewandt. Als Beispiele für derartige Verfahren können die Gasreinigung mittels geeigneter Adsorptionsmittel, durch Molekularsiebe oder durch Absorption in hochhygroskopischen Flüssigkeiten angeführt werden.

Ein weiteres bekanntes Verfahren zur Gasreinigung führt die Auskondensation der unerwünschten Gasbestandteile durch Kühlung des Gasstroms herbei.

Die Abkühlung des zu reinigenden Gases auf die zur Kondensation der unerwünschten Gasbestandteile erforderliche Temperatur wird durch den Einsatz von Kältemaschinen erreicht. Bei derartigen Anlagen wird jedoch angestrebt, den für die Gaskühlung notwendigen externen Energieeinsatz zu verringern.

Eine häufig eingesetzte Technik besteht in der Reduzierung der für die Kältemaschine notwendigen Antriebsenergie durch Kälterückgewinnung. Dies erfolgt durch Vorkühlung des noch ungereinigten warmen Gases (Rohgas) mit bereits gereinigtem kalten Gas (Reingas) über einen Wärmetauscher (WT). Auf diese Weise wird erreicht, daß die Kältemaschine aufgrund der bereits reduzierten Differenz zwischen der Temperatur des vorgekühlten Rohgases und der erforderlichen Kondensationstemperatur mit geringerem Energieeinsatz auskommt.

Ein ähnliches Verfahren ist aus der DE 4001710 A1 bekannt. Bei diesem Verfahren werden zwei Kälte- bzw. Wärme-Speichermassen entlang des Strömungskanals des Gases eingesetzt, von denen die erste der Abkühlung bzw. Vorkühlung des Rohgases und die zweite der Erwärmung des abgekühlten und gereinigten Reingases dient, wodurch sich die erste Speichermasse erwärmt und die zweite Speichermasse abkühlt. Durch periodisches Umschalten der Strömungsrichtung des Gasstromes wird somit ebenfalls eine bessere Energieausnutzung erzielt.

Besonders bei der Reinigung feuchter Gase, bei denen das Wasser schon bei höheren Temperaturen als die unerwünschten Bestandteile auskondensiert, besteht bei der Kälterückgewinnung jedoch die Gefahr, daß der Wärmetauscher (WT) auf der Rohgasseite einfriert. Dieser nachteilige Prozeß wird zusätzlich dadurch beschleunigt, daß sich das über den Wärmetauscher laufende Reingas in der Regel auf einem sehr niedrigen Temperaturniveau befindet.

Zur Verminderung dieser Problematik wurden für die Kälterückgewinnung Spezialwärmetauscher entwickelt. Diese Sonderbauformen sind jedoch teuer und führen nicht in allen Fällen zur Vermeidung des Vereisungsproblems. In einigen Fällen muß daher sogar vollkommen auf eine Kälterückgewinnung verzichtet werden, so daß der externe Energieeinsatz nicht verringert werden kann.

Der Erfindung liegt die Aufgabe zugrunde, ein verfahren und eine Vorrichtung anzugeben, die eine kostengünstige Reinigung auch von feuchten Gasen durch Gaskühlung ermöglichen.

Die Aufgabe wird mit dem Verfahren nach Anspruch 1 und der Vorrichtung nach Anspruch 7 gelöst. Vorteilhafte Ausgestaltungen des Verfahrens und der Vorrichtung sind Gegenstand der Unteransprüche.

Erfindungsgemäß wurde erkannt, daß durch den Einsatz eines modifizierten Verfahrens der Kälterückgewinnung bei der Gasreinigung ein Einfrieren des Wärmetauschers auf einfache Weise vermieden werden kann. Durch diese Modifikation ist der Einsatz teurer Spezialwärmetauscher nicht mehr erforderlich. Das Verfahren kann auch in Fällen eingesetzt werden, in denen bisher eine Kälterückgewinnung vollkommen ausgeschlossen war.

Bei dem erfindungsgemäßen Verfahren wird das zu reinigende Rohgas zunächst in einem Wärmetauscher vorgekühlt, bevor es in einer Kältemaschine bis auf eine vorbestimmte Temperatur abgekühlt wird, bei der unerwünschte Gaskomponenten aus dem Gas auskondensieren. Durch das Auskondensieren der unerwünschten Bestandteile wird der Reinigungseffekt erzielt, so daß am Ausgang der Kältemaschine abgekühltes Reingas mit der vorbestimmten Temperatur vorliegt. Die Vorkühlung des Rohgases im Wärmetauscher erfolgt wie bei den bekannten Verfahren durch bereits abgekühltes Reingas. Erfindungsgemäß wird beim vorliegenden Verfahren dem bereits abgekühlten Reingas vor dessen Durchgang durch den Wärmetauscher erwärmtes Reingas beigemischt, um die Temperatur des in den Wärmetauscher eintretenden Reingases definiert zu erhöhen. Dieses erwärmte Reingas wird aus dem (erwärmten) Reingasstrom abgezweigt, der den Wärmetauscher wieder verläßt. Dieser Reingasstrom ist aufgrund des Wärmetauschvorgangs zur Vorkühlung des Rohgases entsprechend erwärmt.

Bei dem erfindungsgemäßen Verfahren wird somit zumindest ein Teil des bereits am Wärmetauscher vorbeigeführten Reingases nach dem Durchgang durch den Wärmetauscher abgezweigt. Dieser abgezweigte Teil wird dem Reingas vor dem Durchgang durch den Wärmetauscher beigemischt, um dessen Temperatur zu erhöhen. Hierdurch kann je nach vorhandenen Temperatur-, Durchfluß- und Feuchtebedingungen des Rohgases die Temperatur auf der Reingas- bzw. Sekundärseite des Wärmetauschers optimal eingestellt werden. Insbesondere ist durch das Verfahren kein zusätzlicher externer Energieeinsatz, beispielsweise eine Zufuhr elektrischen Stroms, erforderlich. Durch geeignetes Beimischen des nach dem Wärmetauscher vorliegenden wärmeren Reingases zum kälteren Reingas vor dem Wärmetauscher kann die Temperatur auf der Reingasseite des Wärmetauschers so eingestellt werden, daß einerseits ein Einfrieren des Wärmetauschers auf der Rohgas- bzw. Primärseite vermieden wird und andererseits dennoch eine ausreichende Vorkühlung des Rohgases stattfindet.

Vorzugsweise wird beim erfindungsgemäßen Verfahren die Beimischungsmenge an erwärmtem Reingas derart gewählt, daß der Wärmetauscher gerade nicht einfriert. Hierdurch wird die Energieausnutzung des Verfahrens optimiert. Die Beimischungsmenge kann beispielsweise unter Beachtung der Kennlinie des Wärmetauschers, der Durchflußgeschwindigkeiten und der Temperaturverhältnisse vorausberechnet werden.

In einer weiteren bevorzugten Ausführungsform wird die Temperatur des Reingases unmittelbar vor dem Durchgang durch den Wärmetauscher erfaßt, und die Beimischungsmenge an erwärmtem Reingas auf der Grundlage der erfaßten Temperatur so geregelt, daß diese Temperatur annähernd konstant gehalten wird.

In einer weiteren Ausführungsform können entweder das abgekühlte Reingas vor dem Durchgang durch den Wärmetauscher oder das für die Beimischung vorgesehene erwärmte Reingas oder beide durch ein zusätzliches Wärmeelement erwärmt werden. Dieses Wärmeelement besteht vorzugsweise aus einem Wärmetauscher, der durch Umgebungswärme oder Abwärme von der Kältemaschine betrieben wird.

Die erfindungsgemäße Vorrichtung zur Gasreinigung weist entsprechend dem zugrundeliegenden Verfahren einen Wärmetauscher und eine Kältemaschine auf. Der Ausgang der Kältemaschine ist über ein erstes Verbindungselement, insbesondere eine Gasleitung, mit dem Eingang der Sekundärseite des Wärmetauschers verbunden. Vom Ausgang der Sekundärseite des Wärmetauschers ist über ein zweites Verbindungselement, insbesondere eine weitere Gasleitung, eine Verbindung zum ersten Verbindungselement hergestellt. Durch diese Verbindung kann das aus dem Wärmetauscher austretende erwärmte Reingas dem in den Wärmetauscher eintretenden kälteren Reingas beigemischt werden. Zur Steuerung bzw. Regelung der Beimischungsmenge ist ein Regelelement, beispielsweise in Form einer Regelklappe, eingebaut.

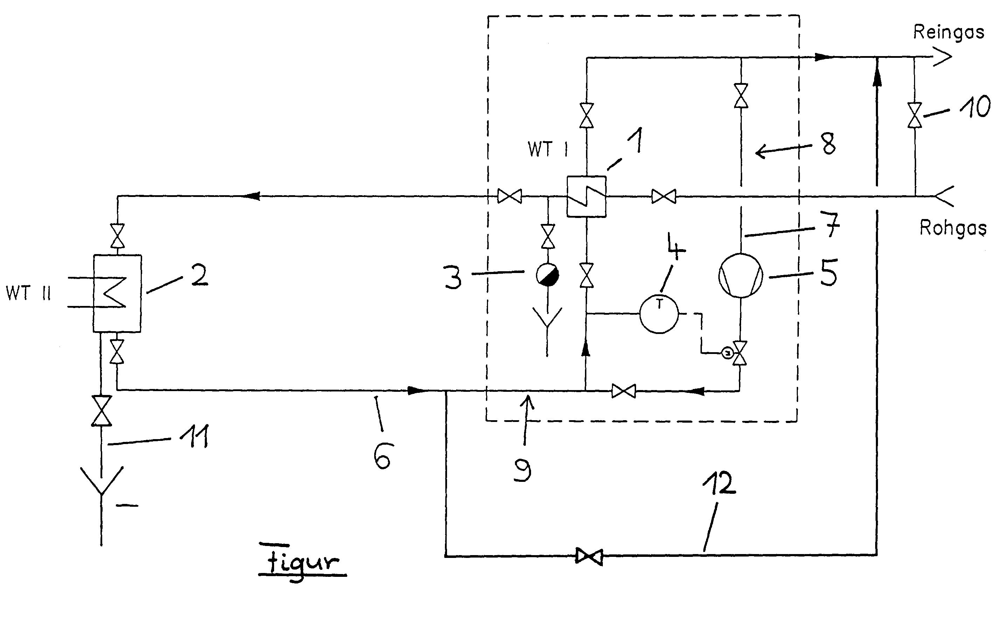

Selbstverständlich können die Verbindungselemente aus unterschiedlichen Einzelelementen, beispielsweise unterschiedlichen Leitungen mit entsprechenden Abzweigungen wie in der Figur dargestellt, bestehen.

Vorzugsweise ist vor dem Eingang der Sekundärseite des Wärmetauschers ein Temperatursensor zur Erfassung der Temperatur des Reingases vorgesehen, der in Verbindung mit einer Regelschaltung das Regelelement zur Einhaltung einer vorgebbaren Solltemperatur des in den Wärmetauscher eintretenden Reingases steuert.

In weiteren Ausführungsformen ist am ersten Verbindungselement und/oder zweiten Verbindungselement ein zusätzliches Wärmeelement zur Erwärmung des Reingases vorgesehen. Dieses Wärmeelement besteht vorzugsweise aus einem Wärmetauscher, der die Umgebungswärme oder die Abwärme von der Kältemaschine ausnutzt.

Alternativ zu den Wärmeelementen kann auch ein weiteres Verbindungselement als Bypass zwischen dem ersten Verbindungselement und dem Ausgang der Sekundärseite des Wärmetauschers vorgesehen sein. Über diesen Bypass kann ein Anteil des abgekühlten Reingases den Wärmetauscher umgehen, um bei sehr kühlem in den Wärmetauscher eintretenden Rohgas ein Einfrieren des Wärmetauschers zu verhindern. Der den Wärmetauscher umgehende Anteil des Reingases ist über ein im Bypass angeordnetes Ventil einstellbar.

Weiterhin kann im ersten Verbindungselement und/oder zwischen der Primärseite des Wärmetauschers und der Kältemaschine eine Zusatzreinigungsstufe vorgesehen sein. Das hierbei eingesetzte Zusatzreinigungselement kann beispielsweise ein Aktivkohlefilter sein.

In dem erfindungsgemäßen Verfahren und der zugehörigen Vorrichtung kann ein preiswerter Standard-Wärmetauscher für die Kälterückgewinnung eingesetzt werden. Durch die Rückführung von aufgewärmtem Reingas zum kalten Reingas vor dem Wärmetauscher kann die Eintrittstemperatur des Reingases bei der Kälterückgewinnung so geregelt werden, daß die Rohgasseite nicht einfriert.

Falls dies zur Erzeugung einer ausreichenden Kühlwirkung am Wärmetauscher erforderlich ist, kann ein Wärmetauscher mit größerer Austauschfläche eingesetzt werden. Durch die Verwendung eines Standardbauteils sind die zusätzlichen Kosten für diese Vergrößerung, im Vergleich zu den Kosten für Spezialwärmetauscher, von untergeordneter Bedeutung.

Das erfindungsgemäße Verfahren und die erfindungsgemäße Vorrichtung bieten insbesondere den Vorteil, daß sie eine Gasreinigung mit einem regenerativen Kälteverfahren ermöglichen. Dies ist einer Gasreinigung ohne Wärmerückgewinnung jedem Falle vorzuziehen, da die durch die Vorkühlung mögliche Verkleinerung der Kältemaschine und die Reduktion der Betriebskosten die jährlichen Gesamtkosten deutlich senken.

Beim erfindungsgemäßen Verfahren wird aufgrund der Kälterückgewinnung ein rationeller Energieeinsatz ermöglicht. Gerade in Fällen, in denen bisher wegen der Gefahr des Einfrierens des Wärmetauschers keine Kälterückgewinnung möglich war, kann durch das erfindungsgemäße Verfahren und die zugehörige Vorrichtung eine deutliche Reduzierung des externen Energieeinsatzes bei der Gasreinigung erreicht werden. Das Verfahren ist technisch "robust", unempfindlich gegen Störungen, und für unterschiedliche Gaszusammensetzungen anwendbar.

Das erfindungsgemäße Verfahren und die erfindungsgemäße Vorrichtung werden nachfolgend in einem Ausführungsbeispiel in Verbindung mit der Figur nochmals erläutert.

Die Figur zeigt schematisch das Fließbild der Gaskühlung bei der Gasreinigung gemäß einer beispielhaften Ausführungsform der vorliegenden Erfindung.

Der ankommende feuchte Rohgasstrom wird zunächst in einem Standard-Wärmetauscher 1 (WT I) vorgekühlt, um den Großteil des enthaltenen Wasserdampfes auszukondensieren. Bei einer Anfangstemperatur des Rohgases von beispielsweise T = 20 - 40°C mit einer relativen Feuchte von ϕ = 100% und einem Fluß von Q = 2000 Nm³/h (Normkubikmeter pro Stunde, bezogen auf 0°C) kann hierbei durch den Wärmetauscher WT I eine Abkühlung des Rohgases auf ca. 2 - 17°C erreicht werden. Hierdurch können im vorliegenden Beispiel im Ablauf 3 nach dem Wärmetauscher ca. 66% der als Wasser auskondensierten Feuchte vom Gas abgetrennt werden.

Durch die Abkühlung des Rohgases im Wärmetauscher WT I wird der Energie- bzw. Kältebedarf der Kältemaschine der Hauptkühlstufe 2 reduziert. Die im Wärmetauscher WT I durch das Rohgas abgegebene Wärme wird vom Reingas aufgenommen (Kälterückgewinnung).

Als Wärmetauscher WT I wird bevorzugt ein Standard-Wärmetauscher aus der Klima- oder Verfahrenstechnik eingesetzt.

Das vorgekühlte (Roh-)Gas wird dann in einem zweiten Wärmetauscher (WT II) in der Kältemaschine 2 abgekühlt und gereinigt. Typische Werte für das nach der Abkühlung und Reinigung erhaltene Reingas betragen T = -40°C und ϕ = 100%. Ca. 33% der ursprünglichen Feuchte fallen im zweiten Wärmetauscher WT II als Eis an. Dieses Eis bzw. Eis/Wassergemisch wird über den Austrag 11 entfernt.

Das kalte Reingas wird anschließend, wie aus der Figur ersichtlich, im Gegenstrom zum Rohgas durch den Wärmetauscher WT I geführt und kühlt dieses - wie oben beschrieben - im Wärmetauscher WT I der Kälterückgewinnung vor.

Hierbei wird dem kalten Reingas vor dem Durchgang durch den Wärmetauscher WT I über ein Bypaßgebläse und die Regelklappe 4 wärmeres Reingas beigemischt. Diese Reingasrückführung erfolgt vorzugsweise temperaturgeregelt und verhindert die Vereisung des Wärmetauschers.

Das wärmere Reingas wird aus dem den Wärmetauscher WT I verlassenden Reingas abgezweigt, das durch die Vorkühlung des Rohgases aufgewärmt wurde. Dieses erwärmte Reingas wird durch einen Verdichter 5 verdichtet und über die Regelklappe 4 dem kalten Reingas beigemischt.

Mit dem Bezugszeichen 10 sind in der Figur Absperrventile bezeichnet.

Im vorliegenden Beispiel wird dem kalten Reingas warmes Reingas, das an der Stelle der Zumischung noch eine Temperatur von T = -10°C aufweist, beigemischt. Das warme Reingas nach dem Verlassen des Wärmetauschers WT I hat hier eine Temperatur von T = 10 - 30°C und eine relative Feuchte von ϕ = 0,2 - 2%. Die Beimischung erfolgt hier mit einem Fluß im Bereich von 1500 - 3000 Nm³/h.

In einer weiteren Ausführungsform können zusätzliche Wärmeelemente im Kreislauf des Reingases vorgesehen sein, um in bestimmten Fällen ausreichend hohe Temperaturen auf der Reingasseite des Wärmetauschers WT I erzeugen zu können. Diese zusätzlichen Elemente können beispielsweise an Positionen 8 und 9 in der Figur vorgesehen sein.

Schließlich ist mit Bezugszeichen 12 noch ein weiterer Bypass angedeutet, der jedoch nur optional in der Vorrichtung vorgesehen ist. Dieser Bypass kann statt der obigen Wärmeelemente eingesetzt werden, um ein Einfrieren des Wärmetauschers WT I zu verhindern. Die Gefahr des Einfrierens besteht insbesondere dann, wenn das in den Wärmetauscher eintretende Rohgas bereits eine sehr niedrige Temperatur von beispielsweise 10°C aufweist. In diesem Fall kann der Wärmetauscher WT I über den Bypass 12 von einem Teil des abgekühlten Reingases umgangen werden, so daß die Kälteleistung und damit die Gefahr des Einfrierens vermindert wird. Der über den Bypass 12 geleitete Anteil des Reingases kann über eine Armatur definiert eingestellt werden.

## Patentansprüche

1. Verfahren zur Gasreinigung, bei dem ein zu reinigendes Robgas in einem Wärmetauscher (1) vorgekühlt und anschließend in einer Kältemaschine (2) auf eine Temperatur abgekühlt wird, bei der unerwünschte Gaskomponenten aus dem Gas auskondensieren, so daß abgekühltes Reingas erhalten wird, wobei die Vorkühlung des Rohgases im Wärmetauscher (1) durch bereits abgekühltes Reingas erfolgt, dadurch gekennzeichnet,
daß dem bereits abgekühlten Reingas vor dessen Durchgang durch den Wärmetauscher (1) erwärmtes Reingas beigemischt wird, das nach dem Durchgang von abgekühltem Reingas durch den Wärmetauscher (1) erhalten wird.

2. Verfahren nach Anspruch 1,
dadurch gekennzeichnet,
daß die Beimischungsmenge an erwärmtem Reingas derart gewählt wird, daß der Wärmetauscher (1) gerade nicht einfriert.

3. Verfahren nach Anspruch 1 oder 2,
dadurch gekennzeichnet,
daß die Temperatur des Reingases unmittelbar vor dem Durchgang durch den Wärmetauscher (1) erfaßt und durch Regelung der Beimischungsmenge an erwärmtem Reingas konstant gehalten wird.

4. Verfahren nach einem der Ansprüche 1 bis 3,
dadurch gekennzeichnet,
daß das abgekühlte Reingas vor dem Durchgang durch den Wärmetauscher (1) durch ein Wärmeelement zusätzlich erwärmt wird.

5. Verfahren nach einem der Ansprüche 1 bis 3,
dadurch gekennzeichnet,
daß das erwärmte Reingas für die Beimischung durch ein Wärmeelement zusätzlich erwärmt wird.

6. Verfahren nach Anspruch 4 oder 5,
dadurch gekennzeichnet,
daß als Wärmeelement ein Wärmetauscher eingesetzt wird, der Umgebungswärme oder Abwärme von der Kältemaschine (2) nutzt.

7. Vorrichtung zur Gasreinigung mit
- einem Wärmetauscher (1) mit einer Primär- und einer Sekundärseite, in dem zu reinigendes Rohgas bei Durchgang durch die Primärseite vorgekühlt werden kann,
- einer Kältemaschine (2) zur Abkühlung von vorgekühltem Rohgas auf Temperaturen, bei denen unerwünschte Gaskomponenten aus dem Gas auskondensieren, so daß an einem Ausgang der Kältemaschine abgekühltes Reingas erhalten wird,
- einem ersten Verbindungselement (6) zwischen dem Ausgang der Kältemaschine (2) und einem Eingang der Sekundärseite des Wärmetauschers (1) zur Zuführung des abgekühlten Reingases zur Sekundärseite des Wärmetauschers,
- einem zweiten Verbindungselement (7) zwischen einem Ausgang der Sekundärseite des Wärmetauschers (1) und dem ersten Verbindungselement (6) zur Beimischung von durch den Wärmetauscher (1) erwärmtem Reingas zum abgekühlten Reingas im ersten Verbindungselement, und
- einem Regelelement (4) zur Steuerung des Gasflusses des erwärmten Reingases durch das zweite Verbindungselement (7).

8. Vorrichtung nach Anspruch 7,
dadurch gekennzeichnet,
daß das Regelelement (4) eine Regelklappe ist.

9. Vorrichtung nach Anspruch 7 oder 8,
dadurch gekennzeichnet,
daß vor dem Eingang der Sekundärseite des Wärmetauschers (1) ein Temperatursensor zur Erfassung der Temperatur des Reingases vorgesehen ist.

10. Vorrichtung nach Anspruch 9,
dadurch gekennzeichnet,
daß das Regelelement (4) mit einer Regelschaltung verbunden ist, die den Gasfluß auf Grundlage der erfaßten Temperatur steuert.

11. Vorrichtung nach einem der Ansprüche 7 bis 10,
dadurch gekennzeichnet,
daß am ersten Verbindungselement (6) ein zusätzliches Wärmeelement zur Erwärmung des Reingases vorgesehen ist.

12. Vorrichtung nach einem der Ansprüche 7 bis 11,
dadurch gekennzeichnet,
daß am zweiten Verbindungselement (7) ein zusätzliches Wärmeelement zur Erwärmung des Reingases vorgesehen ist.

13. Vorrichtung nach Anspruch 11 oder 12,
dadurch gekennzeichnet,
daß das zusätzliche Wärmeelement ein Wärmetauscher ist, der durch Umgebungswärme oder durch Abwärme von der Kältemaschine (2) betrieben wird.

14. Vorrichtung nach einem der Ansprüche 7 bis 10,
dadurch gekennzeichnet,
daß ein drittes Verbindungselement (12) mit einer Armatur zwischen dem Ausgang der Sekundärseite des Wärmetauschers (1) und dem ersten Verbindungselement (6) vorgesehen ist, so daß ein einstellbarer Anteil des abgekühlten Reingases über das dritte Verbindungselement (12) den Wärmetauscher (1) umgehen kann.

15. Vorrichtung nach einem der Ansprüche 7 bis 14,
dadurch gekennzeichnet,
daß im ersten Verbindungselement (6) und/oder zwischen der Primärseite des Wärmetauschers (1) und der Kältemaschine (2) eine Zusatzreinigungsstufe vorgesehen ist.
